# EUROPÄISCHE PATENTSCHRIFT

(11) **EP 1 209 500 B1**
(45) Veröffentlichungstag und Bekanntmachung des Hinweises auf die Patenterteilung: **26.10.2005**
(21) Anmeldenummer: 01118866.1
(22) Anmeldetag: 16.08.2001
(51) Int. Cl.: G02B 7/02, G03F 7/20

(54) **Vorrichtung zur Lagerung eines optischen Elementes**
Arrangement for mounting an optical element
Dispositif d'assemblage d'un élément optique

(30) Priorität: 31.10.2000 DE 10053899
(43) Veröffentlichungstag der Anmeldung: 29.05.2002
(73) Patentinhaber: Carl Zeiss SMT AG, 73446 Oberkochen (DE)
(72) Erfinder: Dieker, Thomas, 89081 Ulm (DE)
(74) Vertreter: Lorenz, Werner

(56) Entgegenhaltungen:
- EP-A- 0 053 463
- EP-A- 0 230 277
- DE-A- 19 825 716
- US-A- 5 428 482

## Beschreibung

Die Erfindung betrifft eine Vorrichtung zur Lagerung eines optischen Elementes, insbesondere einer Linse in einer Baugruppe.

Bekannt sind Fassungstechniken für rotationssymmetrische optische Elemente, bei der das optische Element über eine Anzahl elastischer Elemente mit einem Fassungskörper verbunden ist. Die elastischen Elemente sind z.B. durch Kleben fest im Bereich des äußeren Randes des optischen Elementes mit diesem verbunden und gleichmäßig über den Umfang verteilt. Die elastischen Elemente sind zumeist als sogenannte Federarme mit einem axial und einem radial liegenden Biegeteil ausgeführt. Bei Bewegungen der Fußpunkte der Federarme relativ zum optischen Element, wie sie z.B. bei der Objektivmontage in Folge von Fertigungstoleranzen und Montageungenauigkeiten auftreten, erfährt das optische Element über den Federarm im wesentlichen eine axiale Kraft, eine radiale Kraft und ein tangentiales Moment. Je nach Art der Fußpunktbewegung stehen die drei daraus resultierenden Lasten bezüglich Vorzeichen und Betrag in einem anderen Verhältnis zueinander. Außer der Art der Fußpunktbewegung ist auch für das Verhältnis zwischen den drei Lasten die Federarmgeometrie und die Werkstoffauswahl bestimmend. Sind die Federarme aus einem linear elastischen Material hergestellt und sind die Formänderungen der Federarme klein, so ist bei gegebenem Lastfall das Verhältnis zwischen den drei Lasten auf das optische Element unabhängig von der Amplitude der Fußpunktbewegung.

Um Deformationen des optischen Elementes aufgrund von Fertigungstoleranzen und Montageungenauigkeiten zu vermeiden ist es z.B. aus der EP 0230277 B1 und der EP 0053463 B1 bekannt eine konstruktive Lagerungsart für das optische Element zu schaffen, durch das die Anbindung zwischen dem optischen Element und der Fassung entsprechend weich gestaltet ist, damit auftretende Lasten soweit wie möglich von dem optischen Element entkoppelt werden können. Ein Problem dabei besteht jedoch darin, daß man z.B. aufgrund der Eigenfrequenzanforderungen die Anbindung nicht zu weich machen kann.

Zum weiteren Stand der Technik wird noch auf den nächsten Stand der Technik, DE 198 25 716 A1, und auf die Patentschrift US 5,428,482 verwiesen.

Der vorliegenden Erfindung liegt die Aufgabe zugrunde eine Vorrichtung zur Lagerung eines optischen Elementes zu schaffen, wobei sich auftretende Lasten nicht negativ auf das optische Element, insbesondere nicht in Form von Oberflächendeformationen auswirken sollen.

Erfindungsgemäß wird diese Aufgabe durch die in Anspruch 1 genannten Merkmale gelöst.

Durch eine erfindungsgemäße Gestaltung der Getriebeelemente und eine entsprechende Wahl der Anbindungsstellen des optischen Elementes oder einer optischen Baugruppe wird bei einem oder mehreren der drei Lastfälle, also einer axialen Fußpunktverschiebung, einer radialen Fußpunktverschiebung und einer tangentialen Fußpunktrotation für die axialen Kräfte, radialen Kräfte und die tangentialen Momente an jedem Anbindungspunkt ein Verhältnis gefunden, bei dem sich die zwei-welligen Anteile der Deformation der optischen Oberfläche des optischen Elementes gegenseitig aufheben. Unter der Annahme, daß die Gesamtsteifigkeiten bei allen konstruktiven Variationen der Getriebeelemente gleich bleiben, erreicht man bei einer vollständigen Kompensation der zwei-welligen Deformationsanteile einen Punkt, bei dem der asphärische Anteil der Deformation als Funktion der Lastenverhältnisse nahe bei einem Minimum liegt. Durch kleine Korrekturen in dem durch die Getriebeelemente bereitgestellten Lastverhältnis kann dann leicht das Minimum der asphärischen Deformation gefunden werden.

Eine auf diese Weise erfindungsgemäß ausgeführte Lagerung vermindert die Übertragung von Verformungen der Fußpunktebene, welche bei Linsen meist ein Fassungsring ist, auf das optische Element gegenüber einer Lagerung mit einer Federarmfassung bekannter Art mit ähnlich großen Steifigkeiten um ein bis zwei Größenordnungen.

Durch die beschriebene Art der Lagerung können außerdem Deformationen minimiert werden, die durch Lagerreaktionen hervorgerufen werden, welche mit Beschleunigungskräften, wie z.B. der Gewichtskraft, im Gleichgewicht stehen. Mit anderen Worten bedeutet dies, daß beschleunigungsbedingte Deformationen der optischen Oberfläche ebenfalls minimiert werden.

Für den Kompensationsmechanismus ist es erfindungsgemäß erforderlich, daß die zwei-welligen Teildeformationen, die durch die axialen Kräfte, radialen Kräfte und die tangentialen Momente an den einzelnen Anbindungsstellen hervorgerufen werden, die gleiche Winkelorientierung besitzen. Hierzu müssen alle Getriebeelemente in einer Symmetrieebene des optischen Elementes liegen. Dies ist bei Linsen an jedem Punkt gegeben, bei optischen Elementen mit nichtrunder Außenkontur muß für die Lagerung eine ausreichende Anzahl von Symmetrieebenen vorhanden sein.

Durch Analysen an Modellen, wie z.B. einer Fenite-Elemente-Analyse, des optischen Elementes oder mit Hilfe geeigneter Messungen an einem realen optischen Element kann für jede Anbindungsstelle ermittelt werden, wie sich dort eingeleitete axiale und radiale Kräfte und tangentiale Momente auf die optische Oberfläche auswirken. So kann z.B. eine Zernike-Analyse die Sensitivität der zwei-welligen Deformation der optischen Oberfläche auf die jeweils eingeleitete Last liefern. Mit Hilfe der so ermittelten Sensitivitäten können für jede Anbindungsstelle ein oder mehrere Verhältnisse der drei Lasten zueinander bestimmt werden, bei dem der gewünschte Kompensationseffekt auftritt.

Die erfindungsgemäße Lösung sind somit Anbindungselemente bzw. Getriebeelemente, die für eine oder mehrere Arten von Fußpunktbewegungen ein geeignetes Verhältnis für die Kompensation der zwei-welligen Deformationsanteile bereitstellen und als mechanische Federgelenkgetriebe ausgeführt werden können. Das optische Element, z.B. eine Linse, kann entweder direkt mit den Getriebeelementen oder indirekt über eine dazwischen angeordnete Fassung verbunden sein.

Erfindungsgemäß werden nicht die auf das optische Element oder die Fassung wirkenden Kräfte kompensiert, sondern die durch diese Kräfte verursachten Teildeformationen auf der optischen Oberfläche. So wie die Kräfte in den Anbindungsstellen zum optischen Element bzw. zum gefaßten optischen Element definiert sind, nämlich als axiale Kraft, radiale Kraft usw. können sie sich zwar nicht gegenseitig aufheben, da sie orthogonal sind, aber jede der sechs einzelnen Lasten verursacht je Anbindungsstelle eine Teildeformation auf der optischen Oberfläche. Diese Teildeformationen sind nicht mehr orthogonal, sondern zum Teil hochgradig gleichgerichtet. Erst diese Gleichrichtung liefert die Basis für die Möglichkeit der Kompensation.

Um exakt reproduzierbare Ergebnisse zu erzielen, sollten die Getriebeelemente Streben, Gelenke und/oder Blattfedern aufweisen, wobei die Gelenke spielfrei und ohne Rastmomente sein sollen. Vorzugsweise kann man hierfür Festkörpergelenke verwenden.

Der Kompensationseffekt ist erfindungsgemäß für Störungen vorgesehen, welche zu einer Veränderung der relativen Position und Orientierung der Fußpunkte der Getriebeelemente führen. Gleiches gilt auch für Veränderungen der Anbindungslasten in den Kopfpunkten der Getriebeelemente, die durch Beschleunigungen hervorgerufen werden.

Besonders vorteilhafte Ergebnisse werden erzielt, wenn das Durchmesser/Dickenverhältnis des optischen Elementes größer als 2:1 ist.

Bei einem mit einer Fassung versehenen optischen Element sollten in vorteilhafter Weise die Anbindungen des optischen Elementes an die Fassung im Bereich zwischen dem äußeren Durchmesser und der Hälfte des äußeren Durchmessers des optischen Elementes liegen.

Die jeweils durch axiale Kräfte, radiale Kräfte und tangentiale Momente (Einzellasten) hervorgerufenen Deformationsverteilungen müssen hinsichtlich ihrer charakteristischen örtlichen Verteilung sehr ähnlich sein, weil dies Voraussetzung dafür ist, mittels geeigneter Getriebeelemente einen Kompensationseffekt erreichen zu können.

Je weiter außen die Anbindungsstelle liegt, desto ähnlicher werden sich die Deformationsverteilungen der jeweiligen Einzellasten einer Anbindungsstelle und desto besser läßt sich ein Kompensationseffekt erreichen. Rückt die Anbindungsstelle sehr weit nach innen, so sind sich die Deformationsverteilungen der Einzellasten ab einer gewissen Grenze so unähnlich, daß eine effektive Kompensation nicht mehr möglich ist.

Vorteilhafte konstruktive Ausgestaltungen der Erfindung ergeben sich aus den weiteren Unteransprüchen und aus den nachfolgend anhand der Zeichnung prinzipmäßig beschriebenen Ausführungsbeispielen.

Es zeigt:
- Figur 1: Prinzipdarstellung eines elastischen Anbindungselementes als Federarm,
- Figur 2a: einen Lastfall mit einer axialen Fußpunktverschiebung mit den Hauptlasten,
- Figur 2b: einen Lastfall mit einer radialen Fußpunktverschiebung mit den Hauptlasten,
- Figur 2c: einen Lastfall mit einer tangentialen Rotation mit den Hauptlasten,
- Figur 3: eine erste Ausführungsform eines Getriebeelementes mit einem winkelförmigen Federarm,
- Figur 4: eine zweite Ausführungsform eines Getriebeelementes mit zwei Streben,
- Figur 5: eine weitere Ausführungsform eines Getriebeelementes mit zwei schrägen Streben und einer gemeinsamen Anbindung an einem optischen Element,
- Figur 6: eine Ausführungsform eines Getriebeelementes mit zwei schräg verlaufenden Streben und einer gemeinsamen Strebe zur Anbindung an einem optischen Element,
- Figur 7: zwei zusätzliche Getriebeelemente zwischen Trägerkörper und optischem Element zur Erhöhung der Steifigkeit von lateralen Schiebebewegungen,
- Figur 8: drei zusätzliche Getriebeelemente zwischen einem Trägerkörper und einem optischen Element zur Erhöhung der Steifigkeit von lateralen Verschiebebewegungen und axialer Rotation,
- Figur 9: ein Getriebeelement, das mit zusätzlichen Blattfedern versehen ist,
- Figur 10: den Kraftverlauf bei einer Ausführungsform nach Figur 9, und
- Figur 11: ein Getriebeelement mit zusätzlichen Drehgelenken mit radialen Drehachsen.

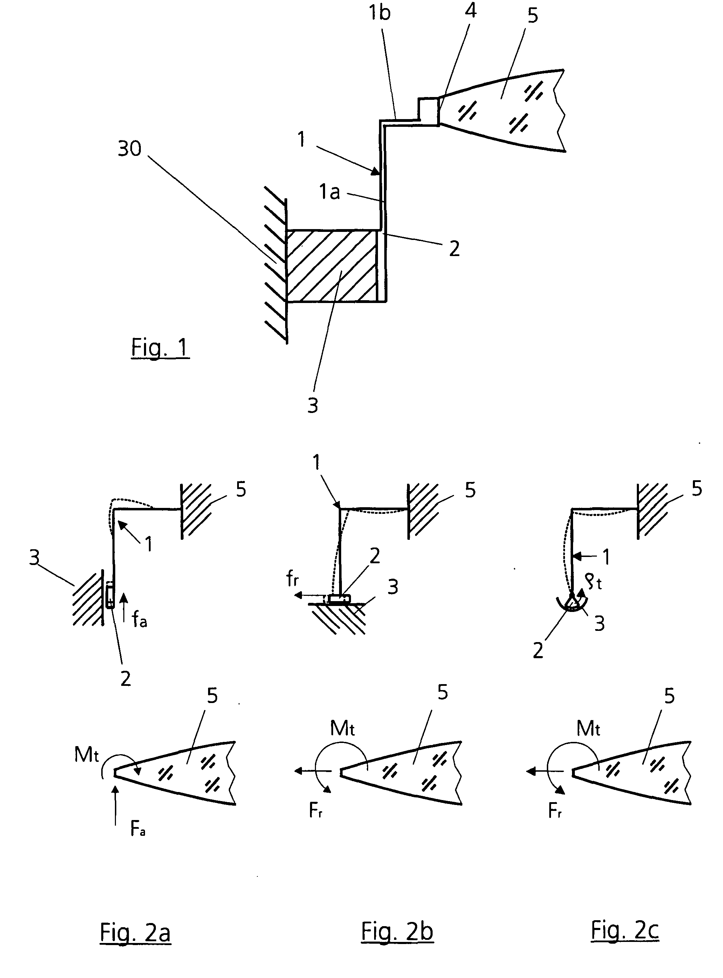

Die Figur 1 zeigt in einer Prinzipdarstellung die Federbeingeometrie eines Getriebeelementes 1, das mit einer axial liegenden Biegefeder 1a und einer radialen Biegefeder 1b ausgeführt ist und damit eine Winkelform bildet. Mehrere gleichmäßig über den Umfang verteilt angeordnete Getriebeelemente 1 sind an einem Ende jeweils über Fußpunkte 2 mit einem Trägerkörper 3 verbunden. Der Trägerkörper 3 ist in einer nicht näher dargestellten Art mit einer äußeren Tragstruktur 30 bzw. einer Baugruppe verbunden, die z.B. ein Objektiv für eine Halbleiter-Lithographie-Belichtungsanlage bildet. Am anderen Ende des Getriebeelementes 1 erfolgt jeweils über die radial liegende Biegefeder 1b über einen Kopfpunkt 4 eine Anbindung an ein optisches Element 5, das bei den nachfolgend besprochenen Ausführungsbeispielen eine Linse ist.

In den Figuren 2a, 2b und 2c sind die verschiedenen Lastfälle und daraus resultierende Hauptlasten auf das optische Element 5 ersichtlich. In Figur 2a ist als Lastfall 1 eine axiale Verschiebung des Fußpunktes 2 dargestellt. Aus der unteren Darstellung von Fig. 2a sind die Lasten im Kopfpunkt 4 bzw. an der Anbindungsstelle zu dem optischen Element 5 ersichtlich.

Figur 2b zeigt einen Lastfall 2 mit einer radialen Verschiebung des Fußpunktes 2, wobei wiederum in der unteren Darstellung der Figur 2b die dazugehörigen Hauptlasten im Kopfpunkt 4 bzw. an der Anbindungsstelle zu dem optischen Element 5 dargestellt sind.

Figur 2c zeigt als Lastfall 3 eine tangentiale Rotation im Bereich des Fußpunktes 2. Auch hier sind in der unteren Darstellung der Figur 2c die daraus resultierenden Hauptlasten im dazugehörigen Kopfpunkt 4 bzw. an der Anbindungsstelle des optischen Elementes 5 ersichtlich.

Die dargestellten Lastfälle 1, 2 und 3 und die damit verbundenen Kräfte und Momente auf das optische Element 5 führen zu einer Deformation der optischen Oberfläche des optischen Elementes. Wenn man die Deformation mit Hilfe des Zernike-Polynoms beschreibt, so stellt man fest, daß ein wesentlicher Anteil auf Terme entfällt, die zusammen die sogenannte Zwei-Welligkeit bilden. Betrachtet man nun diejenigen Deformationen, die auf die axialen Kräfte, radialen Kräfte und tangentialen Momente auf das optische Element zurückgehen getrennt, so stellt man fest, daß bei allen drei Teildeformationen der zwei-wellige Anteil der jeweiligen Deformation sehr ausgeprägt ist. Alle Zwei-Welligkeiten haben gleiche winklige Orientierung und unterscheiden sich ansonsten nur im Vorzeichen und im Betrag.

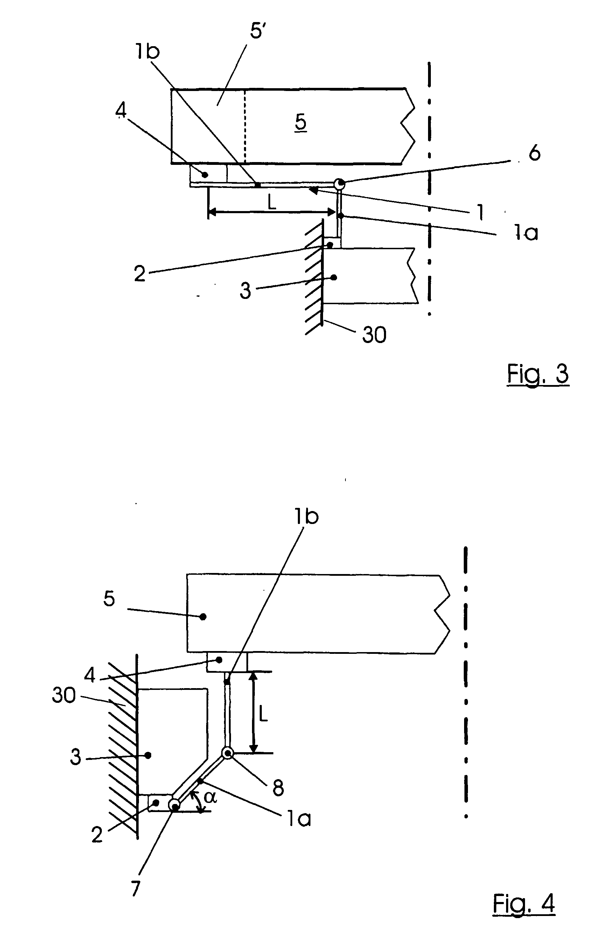

In den Figuren 3 bis 9 sind prinzipmäßig verschiedene Getriebeelemente 1 dargestellt, die so angeordnet und dimensioniert sind, daß sie bei den vorstehend erwähnten Störungseinwirkungen ein Kompensationseffekt hinsichtlich der Deformation der optischen Oberfläche des optischen Elementes 5 ergeben. Der Kompensationseffekt ist dabei dann gegeben, wenn der RMS-Wert (root means square) der Summe derjenigen Teildeformationen der optischen Oberfläche des optischen Elementes 5, die durch eine axiale, eine radiale Kraft und ein tangentiales Moment an einem beliebigen Kopfpunkt 4 eines Getriebeelementes 1 verursacht werden, um mindestens den Faktor 2 kleiner, vorzugsweise kleiner 4, ist als der größte RMS-Wert einer der drei genannten Teildeformationen. Dies gilt für einen Kombinationseffekt für Störungen, welche zu einer Veränderung der relativen Position und Orientierung der Fußpunkte der Getriebeelemente führen und auch für Änderungen der Anbindungslasten in den Kopfpunkten der Getriebeelemente, die durch Beschleunigungen, wie z.B. Gewichtskräfte, hervorgerufen werden.

Die Figur 3 zeigt ein Ausführungsbeispiel mit einem Getriebeelement 1, das über einen Fußpunkt bzw. Anbindungsstück 2 mit dem Trägerkörper 3 durch eine Strebe bzw. Blattfeder 1a, welche axial ausgerichtet ist, verbunden ist. Am anderen Ende der Strebe 1a ist ein Gelenk 6 mit tangentialer Drehachse angeordnet. Eine zweite Strebe 1b bzw. Blattfeder mit radialer Ausrichtung ist an einem Ende mit dem Gelenk 6 und am anderen Ende am Kopfpunkt 4 bzw. Anbindungsstück mit dem optischen Element 5 verbunden. Im Unterschied zum Stand der Technik erstreckt sich dabei die Strebe 1b radial von ihrer Verbindung mit der Strebe 1a bzw. dem Gelenk 6 von innen nach außen. Anstelle einer Anbindung direkt an die Linse 5 kann die Anbindung der Strebe 1b auch an eine Fassung 5' (gestrichelt angedeutet) erfolgen. Gleiches gilt im übrigen auch für die nachfolgend noch zu beschreibenden Ausführungsformen.

Die Figur 4 zeigt eine Strebe 1a des Getriebeelementes 1, die unter einem Winkel α, der zwischen 0° und 90° liegt, zu einer Ebene mit axialer Fläche normal ausgerichtet ist. Die Strebe 1a ist an ihrem Fußpunkt 2 an ein Fußpunktgelenk 7 angelenkt und über ein Anbindungsstück mit dem Trägerkörper 3 verbunden. An dem von dem Fußpunkt 2 abgewandten Ende der Strebe 1a befindet sich ein zweites Gelenk 8, das mit einer zweiten axial ausgerichteten Strebe 1b verbunden ist. Das Fußpunktgelenk 7 besitzt eine tangentiale Drehachse und das Gelenk 8 ist mit einer tangentialen Drehachse versehen. Die Strebe 1b ist an ihrem von dem zweiten Gelenk 8 abgewandten Ende mit ihrer axialen Ausrichtung am Kopfpunkt 4 bzw. über ein Anbindungsstück mit dem optischen Element 5 verbunden.

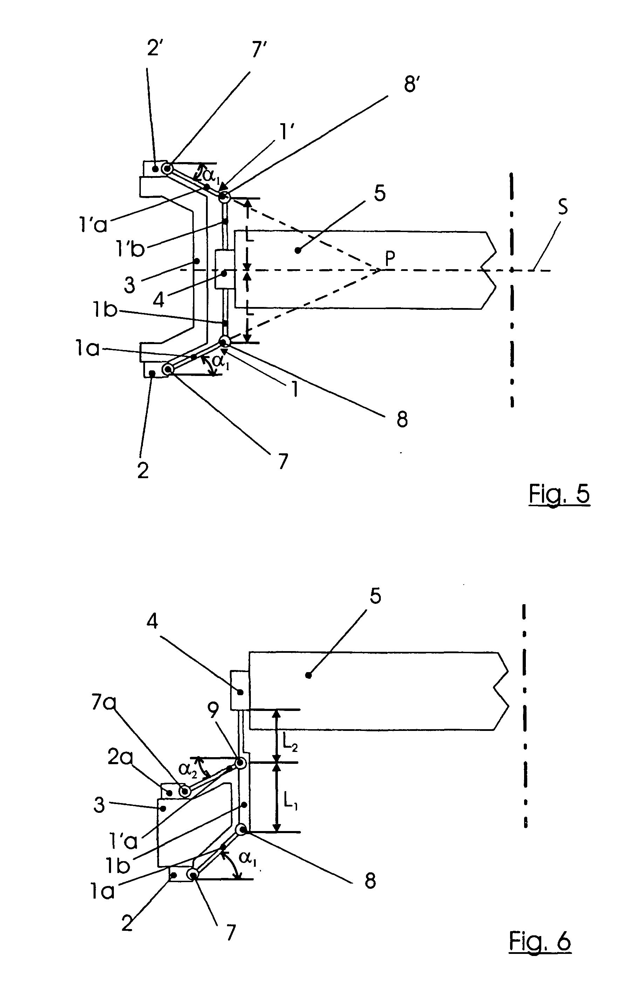

In der Figur 5 ist ein Ausführungsbeispiel dargestellt, das aus zwei spiegelbildlich zueinander angeordneten Getriebeelementen 1 und 1' besteht. Wie ersichtlich stellt diese Ausführungsform eine "Verdopplung" des in der Figur 4 dargestellten Ausführungsbeispieles dar, wobei die beiden axial verlaufenden Streben 1b und 1'b an einem gemeinsamen Kopfpunkt bzw. Anbindungsstück 4 zur Verbindung mit dem optischen Element 5 enden.

Wie ersichtlich ist das zweite Getriebeelement 1' dem ersten Getriebeelement 1 gespiegelt gegenüber angeordnet, wobei die Spiegelungsebene eine axiale Flächennormale besitzt. Die beiden Getriebeelemente 1 und 1' bilden auf diese Weise ein Viergelenk, bei der dem Momentanpol der Bewegung des Kopfpunktes bzw. Anbindungsstückes 4 in einer Ebene liegt, die eine axiale Flächennormale besitzt und die auf der Höhe des Kopfpunktes 4 liegt. (Gemeint ist dabei diejenige Bewegung des Kopfpunktes bzw. Anbindungsstückes 4, wenn das optische Element oder die Fassung 5' des optischen Elementes 5 noch nicht adaptiert ist.)

In der Figur 6 ist ein Ausführungsbeispiel beschrieben, wobei zwei Fußpunkte bzw. Anbindungsstücke 2 und 2a an dem Trägerkörper 3 vorgesehen sind. Ebenso wie bei den Ausführungsbeispielen nach den Figuren 4 und 5 verlaufen die Streben 1a und 1'a unter einem Winkel α1, der zwischen 0 und 90° beträgt und einem Winkel α'1 zu einer Ebene mit axialer Flächennormale. Beide Streben 1a und 1'a sind jeweils über ein Fußpunktgelenk 7 bzw. 7a mit dem Trägerkörper 3 verbunden. Das Fußpunktgelenk 7 ist ebenfalls mit tangentialer Drehachse versehen. Ein zweites Gelenk 8 mit tangentialer Drehachse ist auf dem von dem Fußpunkt 2 abgewandten Ende mit der Strebe 1a verbunden. Die Strebe 1'a ist an ihrem von dem Fußpunktgelenk 7' abgewandten Ende mit einem dritten Gelenk 9, das ebenfalls mit einer tangentialen Drehachse versehen ist, verbunden. Das dritte Gelenk 9 ist im Mittelbereich der Strebe 1b angeordnet, welche axial ausgerichtet ist. Mit einem Ende ist die axiale Strebe 1b mit dem zweiten Gelenk 8 verbunden, während es am anderen Ende am Kopfpunkt bzw. Anbindungsstück 4 mit dem optischen Element 5 verbunden ist.

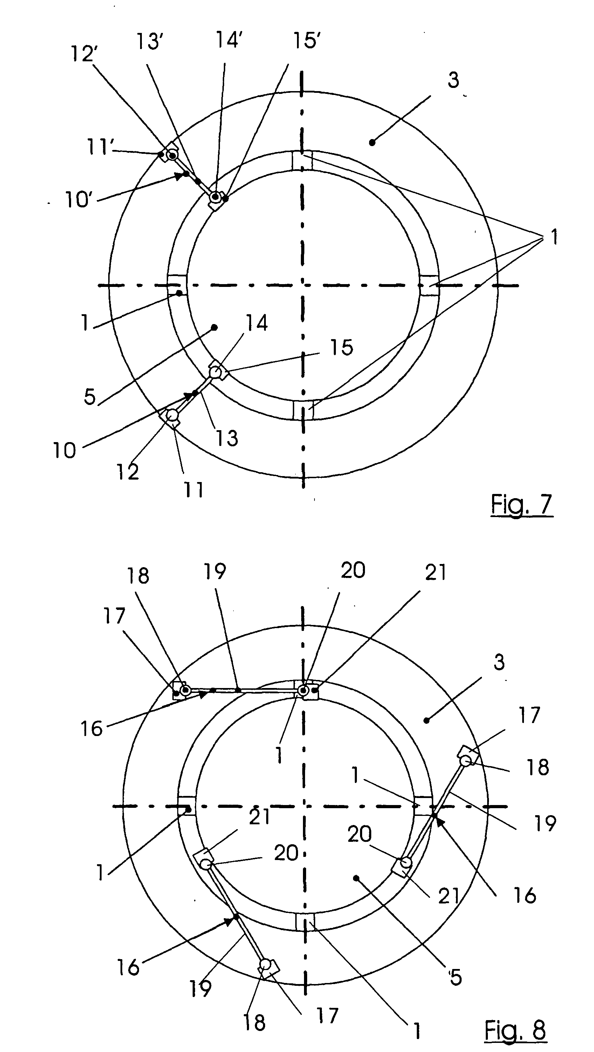

Die Figur 7 zeigt in der Draufsicht ein Ausführungsbeispiel mit zwei zusätzlichen Getriebeelementen 10 und 10' zwischen dem Trägerkörper 3 und dem optischen Element 5. Die "üblichen" Getriebeelemente 1 sind in der Figur 7 mit insgesamt 4 über den Umfang verteilten Elementen nur angedeutet. Durch die zusätzlichen Getriebeelemente 10 und 10' wird die Steifigkeit von lateralen Verschiebebewegungen zwischen dem Trägerkörper 3 und dem optischem Element 5 erhöht. Die zusätzlichen Getriebeelemente 10 und 10' bestehen aus je einem Anbindungsstück bzw. Fußpunkt 11 und 11' zum Trägerkörper und jeweils einem Fußpunktgelenk 12 bzw. 12'. Das Gelenk 12 bzw. 12' ist mit tangentialem und axialem Drehfreiheitsgrad versehen. Eine Blattfeder bzw. Strebe 13 ist radial ausgerichtet und an einem Ende mit dem Fußpunktgelenk 12 bzw. 12' verbunden. Das jeweils andere Ende der Strebe 13 bzw. 13' ist jeweils über ein Gelenk 14 bzw. 14' mit tangentialem und axialem Drehfreiheitsgrad mit dem Kopfpunkt bzw. dem Anbindungsstück 15 bzw. 15' verbunden. Das Anbindungsstück 15 bzw. 15' bildet die Anbindung zu dem optischen Element 5.

In der Figur 8 sind drei zusätzliche Getriebeelemente 16 dargestellt, die gleichmäßig über den Umfang verteilt angeordnet sind. Die drei zusätzlichen Getriebeelemente 16 sind zwischen dem Trägerkörper 3 und dem optischen Element 5 angeordnet und haben die Funktion die Steifigkeit von lateralen Verschiebebewegungen und axialer Rotation zwischen Trägerkörper 3 und optischem Element 5 zu erhöhen.

Jedes der drei Getriebeelemente 16 weist ein Fußpunktgelenk 18 mit tangentialem und axialem Drehfreiheitsgrad auf und ist über ein Anbindungsstück bzw. einen Fußpunkt 17 mit dem Trägerkörper 3 verbunden. Jeweils eine zu dem optischen Element 5 tangential ausgerichtete Strebe 19 ist an einem Ende jeweils mit dem Fußpunktgelenk 18 und mit seinem anderen Ende mit einem Kopfpunktgelenk 20 verbunden. Das Kopfpunktgelenk 20 ist mit axialem und tangentialem Drehfreiheitsgrad versehen. Jedes Kopfpunktgelenk 20 ist über einen Kopfpunkt bzw. ein Anbindungsstück 21 mit dem optischen Element 5 verbunden.

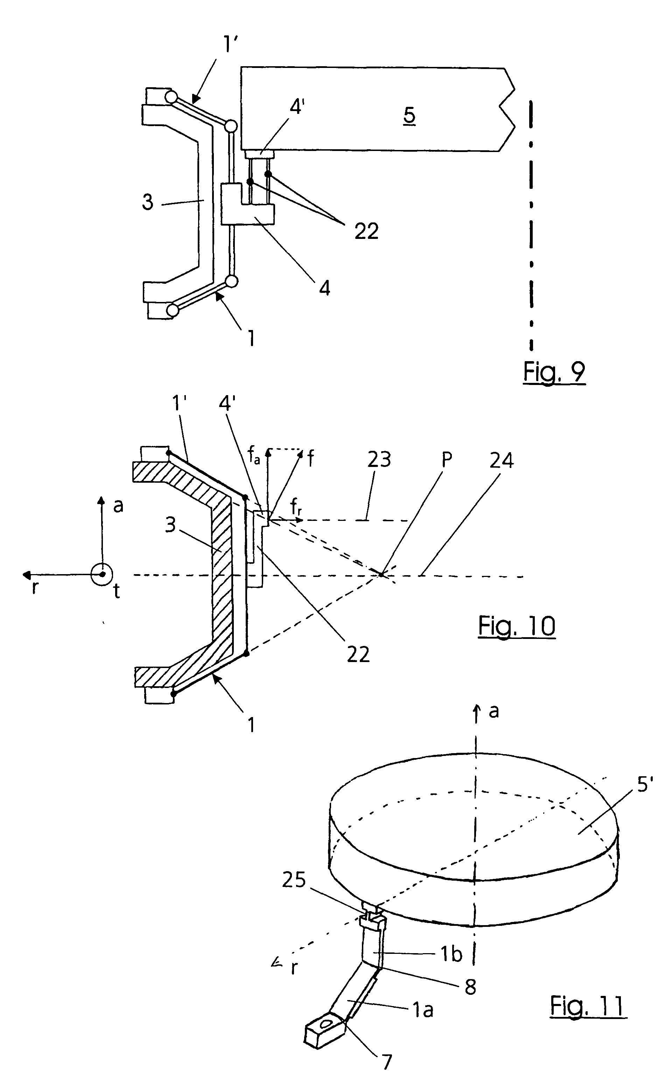

In der Figur 9 ist eine Ausgestaltung eines Getriebeelementes 1 und eines dazu spiegelbildlich angeordneten Getriebeelementes 1' dargestellt, welches ähnlich im Aufbau ist wie das anhand der Figur 5 beschriebene Ausführungsbeispiel. Anstelle einer direkten Anbindung der beiden Getriebeelemente 1 und 1' erfolgt hier die Anbindung über dazwischengeschaltete Blattfedern 22, wobei in der Figur 9 beispielsweise zwei nebeneinander bzw. radial hintereinander angeordnete Blattfedern 22 vorgesehen sind. Die Blattfedern 22 sind dabei jeweils mit einem Ende über das Anbindungsstück 4' mit dem optischen Element 5 verbunden, während das jeweils andere Enden an dem Verbindungsstück 4, durch das die beiden Getriebeelemente 1 und 1' miteinander verbunden sind, befestigt ist. Grundsätzlich ist der Getriebeelementenaufbau jedoch gleich wie bei dem Ausführungsbeispiel nach der Figur 5. Die zusätzlichen Blattfedern 22 können auch bei den anderen Ausführungsbeispielen eingesetzt werden. Dies betrifft insbesondere die Getriebeelemente nach der Figur 3 und der Figur 6, bei denen der Momentanpol der Bewegung des Anbindungsstückes zum optischen Element 5 nicht auf der Höhe dieses Anbindungselementes bzw. des Kopfpunktes 4 liegt. Gemeint ist dabei diejenige Bewegung des Anbindungsstückes, wenn das optische Element 5 noch nicht adaptiert ist.

Durch die zusätzlichen Blattfedern wird eine Erniedrigung der radialen Steifigkeit der mit dem jeweiligen Getriebeelement 1 realisierten Verbindung zwischen Trägerkörper 3 und optischem Element 5 erreicht.

Figur 10 stellt zur Figur 9 die Konstellation dar, bei der die Anbindungsebene 23 ungleich der Momentanpolebene 24 ist. Mit "P" ist der Momentanpol der Bewegung des Viergelenk-Getriebes angegeben. Der Bewegungsvektor f im Getriebeelementkopf 4' besteht dann außer aus einer axialen Komponente fa auch aus einem radialen Anteil fr. Bei montiertem optischen Element würde dementsprechend eine relativ große radiale Kraft auf das optische Element wirken. Diese Radialkraft kann dann so groß werden, daß durch einfache Variation der Getriebeparameter es nicht möglich ist, ein zur Kompensation geeignetes Verhältnis von Axialkraft, Radialkraft und Tangentialmoment zu erreichen. Aus diesem Grund werden die zusätzlichen Blattfedern 22 eingesetzt. Diese reduzieren die bei Fußpunktbewegungen auftretende radiale Kraft im Kopfpunkt 4' so stark, daß eine für die Kompensation geeignete Abstimmung der Lastenverhältnisse möglich wird.

Bei den vorstehend beschriebenen Ausführungsbeispielen sind die Getriebeelemente jeweils direkt an dem optischen Element angebunden. Selbstverständlich ist es im Rahmen der Erfindung auch möglich die Getriebeelemente an einem gefaßten optischen Element bzw. an einer Fassung 5' des optischen Elementes 5 anzubinden (wie in Figur 3 angedeutet).

Die Figur 11 zeigt eine Ausgestaltung eines Getriebeelementes mit zusätzlichen Drehgelenken 25 (in der Zeichnung zur Vereinfachung nur eines dargestellt) mit radialen Drehachsen. Wie ersichtlich, ist das zusätzliche Drehgelenk 25 als Festkörpergelenk mit einem dünnen Verbindungssteg ausgebildet, um die Übertragung radialer Momente auf das optische Element 5 oder dessen Fassung 5' zu minimieren. Dargestellt ist dabei das zusätzliche Drehgelenk 25 anhand eines Ausführungsbeispieles nach der Figur 4. Selbstverständlich sind derartige zusätzliche Drehgelenke 25 auch bei den anderen Ausführungsbeispielen möglich.

## Patentansprüche

1. Vorrichtung zur Lagerung eines optischen Elementes, insbesondere einer Linse, in einer Baugruppe mit folgenden Merkmalen:
1.1 einem Trägerkörper (3) und zwei oder mehr Getriebeelementen (1),
1.2 der Trägerkörper (3) ist einerseits mit einer äußeren Tragstruktur (30) und über Fußpunkte (2) mit den Getriebeelementen (1) verbunden,
1.3 die Getriebeelemente (1) sind über Kopfpunkte (4) direkt mit dem optischen Element (5) oder indirekt über eine dazwischen angeordnete Fassung (5') mit dem optischen Element (5) verbunden,
1.4 die Kopfpunkte (4) der Getriebeelemente (1) befinden sich in Symmetrieebenen des optischen Elementes (5), die durch eine axiale Achse und eine radiale Achse des optischen Elementes (5) aufgespannt sind,
1.5 die Getriebeelemente (1) sind so angeordnet und dimensioniert, dass sich bei Störungseinwirkungen ein Kompensationseffekt hinsichtlich einer Deformation einer optischen Oberfläche des optischen Elementes (5) ergibt, **dadurch gekennzeichnet, dass**
1.6 die Getriebeelemente (1) ein Gelenk (6,7,7',8,8',7a,9) mit in Bezug auf das optische Element (5) tangentialer Drehachse aufweisen, welches es ermöglicht, die Getriebeparameter derart zu variieren, dass ein zum Kompensationseffekt geeignetes Verhältnis von Axialkraft, Radialkraft und Tangentialmoment erreicht wird, derart dass der Kompensationseffekt dann gegeben ist, wenn der RMS-Wert der Summe derjenigen Teildeformationen der optischen Oberfläche des optischen Elementes (5), die durch eine axiale, eine radiale Kraft und ein tangentiales Element an einem beliebigen Kopfpunkt (4) eines Getriebeelementes (1) verursacht werden, um mindestens den Faktor 2 kleiner ist als der größte RMS-Wert einer der drei genannten Teildeformationen.

2. Vorrichtung nach Anspruch 1, **dadurch gekennzeichnet, dass** der RMS-Wert um mindestens den Faktor 4 kleiner ist als der größte RMS-Wert einer der drei genannten Teildeformationen.

3. Vorrichtung nach Anspruch 1, **dadurch gekennzeichnet, dass** die Getriebeelemente (1) Streben, Gelenke (6,7,8,9) und/oder Blattfedern aufweisen, wobei die Gelenke spielfrei und ohne Rastmomente sind.

4. Vorrichtung nach Anspruch 3, **dadurch gekennzeichnet, dass** die Gelenke (6,7,8,9) zumindest teilweise als Festkörpergelenke ausgeführt sind.

5. Vorrichtung nach einem der Ansprüche 1 bis 4, **dadurch gekennzeichnet, dass** bei einem mit einer Fassung (5') versehenen optischen Element (5) die Anbindungen des optischen Elementes (5) an die Fassung (5') im Bereich zwischen dem äußeren Durchmesser und der Hälfte des äußeren Durchmessers des optischen Elementes (5) liegen.

6. Vorrichtung nach einem der Ansprüche 1 bis 5, **dadurch gekennzeichnet, dass** das Getriebeelement (1) eine axial ausgerichtete Strebe (1a) aufweist, die an einem Ende einen Fußpunkt (Anbindungsstück 2) zu dem Trägerkörper (3) bildet, während das anderen Ende mit einem Gelenk (6) verbunden ist, das mit einer tangentialen Drehachse versehen ist, wobei sich an das Gelenk (6) eine zweite radial ausgerichtete Strebe (1b) mit einem Ende anschließt, wobei das andere Ende den Kopfpunkt (Anbindungsstück 4) an das optische Element (3) oder dessen Fassung (5') bildet.

7. Vorrichtung nach einem der Ansprüche 1 bis 5, **dadurch gekennzeichnet, dass** das Getriebeelement (1) über ein Fußpunktgelenk (7) mit tangentialer Drehachse als Fußpunkt mit dem Trägerkörper (3) verbunden ist, wobei eine Strebe (1a) mit dem Fußpunktgelenk (7) an einem Ende und mit einem zweiten Gelenk (8) verbunden ist und unter einem Winkel α zu einer Ebene mit axialer Flächennormalen ausgerichtet ist, wobei der Winkel α zwischen 0 und 90° beträgt und das zweite Gelenk (8) eine tangentiale Drehachse aufweist, und wobei sich an das zweite Gelenk (8) eine zweite Strebe (1b) in axialer Ausrichtung anschließt, das mit seinem anderen Ende den Kopfpunkt (4) zu dem optischen Element (5) oder dessen Fassung (5') bildet.

8. Vorrichtung nach Anspruch 7, **dadurch gekennzeichnet, dass** zusätzlich zu dem aus dem Fußpunktgelenk (7), der ersten Strebe (1a), dem zweiten Gelenk (8) und der zweiten Strebe (1b) gebildeten Getriebeelement (1) ein weiteres spiegelbildlich dazu angeordnetes Getriebeelement (1') vorgesehen ist, wobei beide zweite Streben (1b,1'b) einen gemeinsamen Kopfpunkt (4) als Anbindung an das optische Element (5) oder dessen Fassung (5') aufweisen.

9. Vorrichtung nach Anspruch 8, **dadurch gekennzeichnet, dass** die Spiegelungsebene (S) eine axiale Flächennormale besitzt und dass die beiden spiegelbildlich angeordneten Getriebeelemente (1,1') zusammen ein Viergelenk bilden, bei dem der Momentanpol (P) der Bewegung des gemeinsamen Kopfpunktes (Anbindungsstück 4) in einer Ebene liegt, die eine axiale Flächennormale besitzt und die auf der Höhe des Kopfpunktes liegt.

10. Vorrichtung nach einem der Ansprüche 1 bis 5, **dadurch gekennzeichnet, dass** das Getriebeelement (1) aus folgenden Einzelteilen gebildet ist:
a) an dem Fußpunkt (2) ist ein Fußpunktgelenk (7) mit tangentialer Drehachse angeordnet,
b) an einem Ende ist eine erste Strebe (1a) mit dem Fußpunktgelenk (7) und am anderen Ende mit einem zweiten Gelenk (8) verbunden,
c) die erste Strebe (1a) ist unter einem Winkel α1 zu einer Ebene mit axialer Flächennormalen ausgerichtet, wobei der Winkel α zwischen 0 und 90° beträgt,
d) das zweite Gelenk (8) weist eine tangentiale Drehachse auf,
e) ein zweites Anbindungsstück (2a) an dem Trägerkörper (3) bildet ein zweites Verbindungselement zum Trägerkörper (3),
f) ein zweiter Fußpunktgelenk (7a) mit tangentialer Drehachse ist mit dem Anbindungsstück (2a) verbunden,
g) eine zweite Strebe (1'a) ist an einem Ende mit dem zweiten Fußpunktgelenk (7a) und am anderen Ende mit einem dritten Gelenk (9) verbunden,
h) die zweite Strebe (1'a) ist in einem Winkel α2 zu einer Ebene mit axialer Flächennormalen ausgerichtet,
i) der Winkel α2 liegt zwischen 0 und 90°,
j) eine dritte Strebe (1b) ist mit ihrem einen Ende mit dem zweiten Gelenk (8), im Mittenbereich mit dem dritten Gelenk (9) und am anderen Ende mit dem Kopfpunkt (4) als Anbindungsstück mit dem optischen Element (5) oder der Fassung (5') des optischen Elementes (5) verbunden, und
k) die dritte Strebe (9) ist axial ausgerichtet.

11. Vorrichtung nach einem der Ansprüche 1 bis 10, **dadurch gekennzeichnet, dass** neben den Getriebeelementen (1) zwei zusätzliche Getriebeelemente (10,10') zwischen dem Trägerkörper (3) und dem optischen Element (5) oder dessen Fassung (5') zur Erhöhung der Steifigkeit von lateralen Verschiebebewegungen zwischen Trägerkörper (3) und optischem Element (5) oder dessen Fassung (5') mit folgenden Merkmalen vorgesehen sind:
a) jeweils einem Anbindungsstück (11,11') zum Trägerkörper (3),
b) einem Gelenk (12,12') mit tangentialem und axialem Drehfreiheitsgrad, das mit dem Anbindungsstück (11,11') verbunden ist,
c) einer radial ausgerichteten Strebe (13,13'), die an einem Ende mit dem Gelenk (12,12') und am anderen Ende mit einem zweiten Gelenk (14,14') verbunden ist,
d) das zweite Gelenk (14,14') ist mit tangentialem und axialem Drehfreiheitsgrad versehen und
e) das zweite Gelenk (14,14') ist mit einem zweiten Anbindungsstück (15,15') verbunden, welches die Anbindung zum optischen Element (5) oder dessen Fassung (5') bildet.

12. Vorrichtung nach einem der Ansprüche 1 bis 10, **dadurch gekennzeichnet, dass** neben den Getriebeelementen (1) drei zusätzliche Getriebeelemente (16) zwischen Trägerkörper (3) und optischem Element (5) bzw. dessen Fassung (5') zur Erhöhung der Steifigkeit von lateralen Verschiebebewegungen und der axialen Rotation zwischen Trägerkörper (3) und dem optischen Element (5) bzw. dessen Fassung (5') mit folgenden Merkmalen vorgesehen sind:
a) ein Anbindungsstück (17) zum Trägerkörper (3),
b) ein erstes Gelenk (18) mit tangentialem und axialem Drehfreiheitsgrad, das mit dem Anbindungsstück (17) verbunden ist,
c) eine tangential ausgerichteten Strebe (19), die an einem Ende mit dem ersten Gelenk (17) und am anderen Ende mit einem zweiten Gelenk (20) verbunden ist,
d) das zweite Gelenk (20) ist mit tangentialem und axialem Drehfreiheitsgrad versehen und mit einem zweiten Anbindungsstück (21) verbunden, und
e) das zweite Anbindungsstück (21) bildet die Anbindung zum optischen Element (5) oder dessen Fassung (5').

13. Vorrichtung nach einem der Ansprüche 1 bis 12, **dadurch gekennzeichnet, dass** zur Minimierung der Übertragung radialer Momente auf das optische Element (5) oder dessen Fassung (5') im Bereich der jeweiligen Kopfpunkte (4) als Anbindungsstellen zum optischen Element (5) oder dessen Fassung (5') zusätzlich Drehgelenke (25) mit radialer Drehachse angebracht sind.

14. Vorrichtung nach einem der Ansprüche 1 bis 13, **dadurch ge** **kennzeichnet**; dass die Getriebeelemente (1) zur Erniedrigung der radialen Steifigkeit der mit dem jeweiligen Getriebeelement realisierten Verbindung zwischen dem Trägerkörper (3) und dem optischen Element (5) oder dessen Fassung (5') mit zusätzlichen Blattfedern (22) versehen sind.

15. Objektiv für eine Halbleiter-Lithographie-Belichtungsanlage mit einer Vorrichtung zur Lagerung eines optischen Elements nach einem der Ansprüche 1 bis 14.

16. Verfahren zur Verwendung der Vorrichtung nach einem der Ansprüche 1 bis 4, **dadurch gekennzeichnet, dass** der Kompensationseffekt für Störungen vorgesehen ist, welche zu einer Veränderung der relativen Position und der Orientierung der Fußpunkte (2) der Getriebeelemente (1) führen.

17. Verfahren zur Verwendung der Vorrichtung nach einem der Ansprüche 1 bis 4, **dadurch gekennzeichnet, dass** der Kompensationseffekt für Veränderungen der Anbindungslasten in den Kopfpunkten (4) der Getriebeelemente (1) vorgesehen ist, die durch Beschleunigungen hervorgerufen werden.

## Claims

1. Device for storing an optical element, particularly a lens, in an assembly having the following features:
1.1 a support body (3) and two or more transmission elements (1),
1.2 the support body (3) is connected on one side to an outer supporting structure (30) and, through base points (2), to the transmission elements (1),
1.3 the transmission elements (1) are connected directly, through top points (4), to the optical element (5), or indirectly, through an intermediately disposed mount (5'), to the optical element (5),
1.4 the top points (4) of the transmission elements (1) are situated in planes of symmetry of the optical element (5) which are enclosed by an axial axis and a radial axis of the optical element (5),
1.5 the transmission elements (1) are disposed and dimensioned in such a way that, in the case of disturbance effects, a compensation effect is produced in respect of a deformation of an optical surface of the optical element (5), **characterized in that**
1.6 the transmission elements (1) have an articulated joint (6, 7, 7', 8, 8', 7a, 9), having an axis of rotation which is tangential in relation to the optical element (5), which articulated joint enables the transmission parameters to be varied in such a way that a ratio of axial force, radial force and tangential moment suitable for the compensation effect is achieved, in such a way that the compensation effect is obtained when the RMS value of the sum of those partial deformations of the optical surface of the optical element (5) which are caused by an axial force, a radial force and a tangential element at any top point (4) of a transmission element (1) is smaller, by the factor 2, than the greatest RMS value of one of the three said partial deformations.

2. Device according to Claim 1, **characterized in that** the RMS value is smaller, by at least the factor 4, than the greatest RMS value of one of the three said partial deformations.

3. Device according to Claim 1, **characterized in that** the transmission elements (1) have struts, articulated joints (6, 7, 8, 9) and/or leaf springs, the articulated joints being without play and without latching moments.

4. Device according to Claim 3, **characterized in that** the articulated joints (6, 7, 8, 9) are realized, at least partially, as solid articulated joints.

5. Device according to any one of Claims 1 to 4, **characterized in that**, in the case of an optical element (5) provided with a mount (5'), the connections of the optical element (5) bear on the mount (5') in the region between the outer diameter and the half of the outer diameter of the optical element (5).

6. Device according to any one of Claims 1 to 5, **characterized in that** the transmission element (1) has an axially aligned strut (1a) which, at one end, constitutes a base point (fastening piece 2) to the support body (3), while the other end is connected to an articulated joint (6) which is provided with a tangential axis of rotation, one end of a second radially aligned strut (1b) adjoining the articulated joint (6), the other end constituting the top point (fastening piece 4) to the optical element (3) or to its mount (5').

7. Device according to any one of Claims 1 to 5, **characterized in that** the transmission element (1) is connected as a base point, via a base-point articulated joint (7) having a tangential axis of rotation, to the support body (3), one strut (1a) being connected to the base-point articulated joint (7) at one end and to a second articulated joint (8) and being aligned at an angle α to a plane having axial normals to the surface, the angle α being between 0 and 90° and the second articulated joint (8) having a tangential axis of rotation, and the second articulated joint (8) being adjoined by a second strut (1b) in axial alignment which, with its other end, constitutes the top point (4) to the optical element (5) or to its mount (5').

8. Device according to Claim 7, **characterized in that**, in addition to the transmission element (1) constituted by the base-point articulated joint (7), the first strut (1a), the second articulated joint (8) and the second strut (1b), there is provided, disposed in a laterally reversed manner thereto, a further transmission element (1'), both second struts (1,1'b) having a common top point (4) as a fastening to the optical element (5) or to its mount (5').

9. Device according to Claim 8, **characterized in that** the plane of reflection (S) has an axial normal to the surface, and the two transmission elements (1, 1') disposed in a laterally reversed manner together constitute a four-bar linkage in which the instantaneous centre of rotation (P) of the movement of the common top point (fastening piece 4) lies in a plane which has an axial normal to the surface and which is situated at the level of the top point.

10. Device according to any one of Claims 1 to 5, **characterized in that** the transmission element (1) is constituted by the following component parts:
a) a base-point articulated joint (7) having a tangential axis of rotation is disposed at the base point (2),
b) a first strut (1a) is joined, at one end, to the base-point articulated joint (7) and, at the other end, to a second articulated joint (8),
c) the first strut (1a) is aligned at an angle α1 to a plane having axial normals to the surface, the angle α being between 0 and 90°,
d) the second articulated joint (8) has a tangential axis of rotation
e) a second fastening piece (2a) on the support body (3) constitutes a second connecting element to the support body (3),
f) a second base-point articulated joint (7a) having a tangential axis of rotation is connected to the fastening piece (2a),
g) a second strut (1'a) is connected, at one end, to the second base-point articulated joint (7a) and, at the other end, to a third articulated joint (9),
h) the second strut (1'a) is aligned at an angle α2 to a plane having axial normals to the surface,
i) the angle α2 is between 0 and 90°,
j) a third strut (1b) is connected, by its one end, to the second articulated joint (8), in the middle region, to the third articulated joint (9) and, at the other end, to the top point (4), as a fastening piece, to the optical element (5) or to the mount (5') of the optical element (5), and
k) the third strut (9) [sic] is aligned axially.

11. Device according to any one of Claims 1 to 10, **characterized in that**, as well as the transmission elements (1), two additional transmission elements (10, 10') are provided, between the support body (3) and the optical element (5) or its mount (5'), in order to increase the rigidity of lateral translational movements between the support body (3) and the optical element (5) or its mount (5'), having the following features:
a) respectively one fastening piece (11, 11') to the support body (3),
b) an articulated joint (12, 12') which has a tangential and an axial degree of rotational freedom and which is connected to the fastening piece (11, 11'),
c) a radially aligned strut (13, 13') which is connected, at one end, to the articulated joint (12, 12') and, at the other end, to a second articulated joint (14, 14'),
d) the second articulated joint (14, 14') has a tangential and an axial degree of rotational freedom, and
e) the second articulated joint (14, 14') is connected to a second fastening piece (15, 15') which constitutes the fastening to the optical element (5) or to its mount (5').

12. Device according to any one of Claims 1 to 10, **characterized in that**, as well as the transmission elements (1), three additional transmission elements (16) are provided, between the support body (3) and the optical element (5) or its mount (5'), in order to increase the rigidity of lateral translational movements and the axial rotation between the support body (3) and the optical element (5) or its mount (5'), having the following features:
a) a fastening piece (17) to the support body (3),
b) a first articulated joint (18), which has a tangential and an axial degree of rotational freedom and which is connected to the fastening piece (17),
c) a tangentially aligned strut (19) which is connected, at one end, to the first articulated joint (17) and, at the other end, to a second articulated joint (20),
d) the second articulated joint (20) has a tangential and an axial degree of rotational freedom and is connected to a second fastening piece (21), and
e) the second fastening piece (21) constitutes the fastening to the optical element (5) or to its mount (5').

13. Device according to any one of Claims 1 to 12, **characterized in that**, to minimize the transmission of radial moments to the optical element (5) or to its mount (5'), additional pivot joints (25), having a radial axis of rotation, are mounted, in the region of the respective top points (4), as fastening points to the optical element (5) or to its mount (5').

14. Device according to any one of Claims 1 to 13, **characterized in that**, in order to reduce the radial rigidity of the connection realized with the respective transmission element, the transmission elements (1) are provided with additional leaf springs (22) between the support body (3) and the optical element (5) or its mount (5').

15. Lens for a semiconductor lithography exposure apparatus, comprising a device for storing an optical element according to any one of Claims 1 to 14.

16. Method for using the device according to any one of Claims 1 to 4, **characterized in that** the compensation effect is provided for disturbances which result in variations of the relative position and of the orientation of the base points (2) of the transmission elements (1).

17. Method for using the device according to any one of Claims 1 to 4, **characterized in that** the compensation effect is provided for variations of the fastening loads in the top points (4) of the transmission elements (1) that are caused by accelerations.

## Revendications

1. Dispositif de logement d'un élément optique, notamment d'une lentille, dans un ensemble présentant les caractéristiques suivantes :
1.1 un élément de support (3) et deux éléments de transmission (1) ou plus,
1.2 l'élément de support (3) est relié d'une part à une structure porteuse externe (30) et aux éléments de transmission (1) par l'intermédiaire d'embases (2),
1.3 les éléments de transmission (1) sont reliés directement à l'élément optique (5) par l'intermédiaire de têtes (4) ou indirectement à l'élément optique (5) par l'intermédiaire d'une monture (5') disposée entre les deux,
1.4 les têtes (4) des éléments de transmission (1) se trouvent dans les plans de symétrie de l'élément optique (5) qui sont créés par un axe axial et un axe radial de l'élément optique (5),
1.5 les éléments de transmission (1) sont disposés et dimensionnés de telle sorte que, lors de perturbations, un effet de compensation de la déformation d'une surface de l'élément optique (5) soit obtenu, **caractérisé en ce que**
1.6 les éléments de transmission (1) comprennent une articulation (6, 7, 7', 8, 8', 7a, 9) avec un axe de rotation tangentiel par rapport à l'élément optique qui permet de faire varier les paramètres de transmission de façon à ce qu'un rapport entre la force axiale, la force radiale et le couple tangentiel, adapté à l'effet de compensation, soit obtenu de telle sorte que l'effet de compensation apparaisse lorsque la valeur RMS de la somme des déformations partielles de la surface de l'élément optique (5), provoquées par une force axiale, une force radiale et un élément tangentiel au niveau d'une tête (4) quelconque d'un élément de transmission (1), est inférieure d'au moins un facteur 2 par rapport à la valeur RMS la plus importante des trois déformations partielles mentionnées.

2. Dispositif selon la revendication 1, **caractérisé en ce que** la valeur RMS est inférieure d'au moins un facteur 4 par rapport à la valeur RMS la plus importante des trois déformations partielles mentionnées.

3. Dispositif selon la revendication 1, **caractérisé en ce que** les éléments de transmission (1) comprennent des montants, des articulations (6, 7, 8, 9) et/ou des ressorts à lames, les articulations étant sans jeu et sans couple de verrouillage.

4. Dispositif selon la revendication 3, **caractérisé en ce que** les articulations (6, 7, 8, 9) sont conçues au moins partiellement comme des articulations à éléments fixes.

5. Dispositif selon l'une des revendications 1 à 4, **caractérisé en ce que**, lorsqu'un élément optique (5) est pourvu d'une monture (5'), les liaisons de l'élément optique (5) à la monture (5') se trouvent entre le diamètre externe et la moitié du diamètre externe de l'élément optique (5).

6. Dispositif selon l'une des revendications 1 à 5, **caractérisé en ce que** l'élément de transmission (1) comprend un montant axial (1a) qui constitue, au niveau d'une extrémité, une embase (élément de liaison 2) pour l'élément de support (3), tandis que l'autre extrémité est reliée à une articulation (6) qui est pourvue d'un axe de rotation tangentiel, un second montant radial (1b) se raccordant au niveau d'une extrémité à l'articulation (6), l'autre extrémité constituant la tête (élément de liaison 4) de l'élément optique (3) ou de sa monture (5').

7. Dispositif selon l'une des revendications 1 à 5, **caractérisé en ce que** l'élément de transmission (1) est relié à l'élément de support (3) par l'intermédiaire d'une articulation d'embase (7) avec un axe de rotation tangentiel en tant qu'embase, un montant (1a) étant relié avec l'articulation de l'embase (7) au niveau d'une extrémité et à une seconde articulation (8) et orienté avec un angle α par rapport à un plan avec une normale de surface axiale, l'angle α étant compris entre 0 et 90° et la seconde articulation (8) comprenant un axe de rotation tangentiel (8) et un second montant (1b) se raccordant à la seconde articulation (8) avec une orientation axiale, qui forme avec son autre extrémité la tête (4) de l'élément optique (5) ou de sa monture (5').

8. Dispositif selon la revendication 7, **caractérisé en ce que**, en plus de l'élément de transmission (1) constitué de l'articulation d'embase (7), du premier montant (1a), de la deuxième articulation (8) et du deuxième montant (1b), un autre élément de transmission (1'), symétrique par rapport à l'élément de transmission (1), est prévu, les deux montants (1b, 1'b) comprenant une tête (4) commune en tant que liaison à l'élément optique (5) ou à sa monture (5').

9. Dispositif selon la revendication 8, **caractérisé en ce que** le plan de symétrie (S) présente une normale de surface axiale, et **en ce que** les deux éléments de transmission symétriques (1, 1') constituent un quadrilatère articulé dans lequel le centre instantané de rotation (P)du mouvement de la tête commune (élément de liaison 4) se trouve dans un plan qui présente une normale de surface axiale et qui se trouve à la hauteur de la tête.

10. Dispositif selon l'une des revendications 1 à 5, **caractérisé en ce que** l'élément de transmission (1) est constitué des composants suivants :
a) au niveau de l'embase (2) se trouve une articulation d'embase (7) avec un axe de rotation tangentiel,
b) au niveau d'une extrémité un premier montant (1a) est relié à l'articulation de l'embase (7) et au niveau de l'autre extrémité à une deuxième articulation (8),
c) le premier montant (1a) forme un angle α1 par rapport à son plan avec une normale de surface axiale, l'angle α étant de 0 à 90°,
d) la deuxième articulation (8) comprend un axe de rotation tangentiel,
e) un deuxième élément de liaison (2a) sur l'élément de support (3) constitue un deuxième élément de liaison à l'élément de support (3),
f) une deuxième articulation d'embase (7a) avec un axe de rotation tangentiel est reliée à l'élément de liaison (2a),
g) un deuxième montant (1'a) est relié au niveau d'une extrémité à la deuxième articulation d'embase (7a) et au niveau de l'autre extrémité à une troisième articulation (9),
h) le deuxième montant (1'a) forme un angle α2 par rapport à un plan avec une normale de surface axiale,
i) l'angle α2 est compris entre 0 et 90°,
j) un troisième montant (1b) est relié, au niveau d'une extrémité, à la deuxième articulation (8), au milieu à la troisième articulation (9) et au niveau de l'autre extrémité à la tête (4) comme un élément de liaison avec l'élément optique (5) ou la monture (5') de l'élément optique (5), et
k) le troisième montant (9) est orienté de manière axiale.

11. Dispositif selon l'une des revendications 1 à 10, **caractérisé en ce que**, en plus des éléments de transmission (1), deux éléments de transmission supplémentaires (10, 10') sont prévus entre l'élément de support (3) et l'élément optique (5) ou sa monture (5') afin d'augmenter la rigidité des mouvements de coulissement latéraux entre l'élément de support (3) et l'élément optique (5) ou sa monture (5'), avec les caractéristiques suivantes :
a) un élément de liaison (11, 11') à l'élément de support (3),
b) une articulation (12, 12') avec un degré de liberté en rotation tangentielle et axiale, reliée à l'élément de liaison (11, 11'),
c) un montant radial (13, 13') relié au niveau d'une extrémité à l'articulation (12, 12') et au niveau de l'autre extrémité à une deuxième articulation (14, 14'),
d) la deuxième articulation (14, 14') comporte un degré de liberté en rotation tangentielle et axiale et
e) la deuxième articulation (14, 14') est reliée à un deuxième élément de liaison (15, 15') qui constitue la liaison à l'élément optique (5) ou sa monture (5').

12. Dispositif selon l'une des revendications 1 à 10, **caractérisé en ce que**, en plus des éléments de transmission (1), trois éléments de transmission supplémentaires (16) sont prévus entre l'élément de support (3) et l'élément optique (5) ou sa monture (5') afin d'augmenter la rigidité des mouvements de coulissement latéraux et de la rotation axiale entre l'élément de support (3) et l'élément optique (5) ou sa monture (5'), avec les caractéristiques suivantes :
a) un élément de liaison (17) à l'élément de support (3),
b) une première articulation (18) avec un degré de liberté en rotation tangentielle et axiale, reliée à l'élément de liaison (17),
c) un montant tangentiel (19) relié au niveau d'une extrémité à la première articulation (18) et au niveau de l'autre extrémité à une deuxième articulation (20),
d) la deuxième articulation (20) comporte un degré de liberté en rotation tangentielle et axiale et elle est reliée à un deuxième élément de liaison (21), et
e) le deuxième élément de liaison (21) constitue la liaison à l'élément optique (5) ou sa monture (5').

13. Dispositif selon l'une des revendications 1 à 12, **caractérisé en ce que**, pour réduire la transmission des couples radiaux à l'élément optique (5), ou à sa monture (5'), des articulations rotatives (25) avec un axe de rotation radial se trouvent au niveau des têtes (4) correspondantes en tant que points de liaison à l'élément optique (5) ou à sa monture (5').

14. Dispositif selon l'une des revendications 1 à 13, **caractérisé en ce que** les éléments de transmission (1) sont pourvus, pour la diminution de la rigidité radiale de la liaison réalisée avec l'élément de transmission correspondant, entre l'élément de support (3) et l'élément optique (5) ou sa monture (5'), de ressorts à lames supplémentaires (22).

15. Objectif pour une installation d'éclairage de lithographie de semi-conducteurs avec un dispositif de logement d'un élément optique selon l'une des revendications 1 à 14.

16. Procédé d'utilisation du dispositif selon l'une des revendications 1 à 4, **caractérisé en ce qu'**un effet de compensation des perturbations qui provoquent une modification de la position et de l'orientation relative des embases (2) des éléments de transmission (1), est prévu.

17. Procédé d'utilisation du dispositif selon l'une des revendications 1 à 4, **caractérisé en ce qu'**un effet de compensation des modifications des charges des liaisons dans les têtes (4) des éléments de transmission (1), provoquées par une accélération, est prévu.
